# EUROPEAN PATENT SPECIFICATION

(11) **EP 4 398 728 B1**
(45) Date of publication and mention of the grant of the patent: **02.12.2026**
(21) Application number: 22765948.9
(22) Date of filing: 12.08.2022
(51) Int. Cl.: A21D 6/00, A21D 8/02, A21D 8/06, A47J 27/08

(54) **PROCESS FOR PRODUCING EXPANDED BAKED FOOD PRODUCTS AND BAKING OVEN**
VERFAHREN ZUR HERSTELLUNG VON EXPANDIERTEN BACKWAREN UND BACKOVEN
PROCÉDÉ DE PRODUCTION DE PRODUITS ALIMENTAIRES CUITS EXPANSÉS ET FOUR

(30) Priority: 09.09.2021 IT 202100023378
(43) Date of publication of application: 17.07.2024
(73) Proprietor: Materias S.r.l., 80122 Napoli (IT)
(72) Inventor: DI MAIO, Ernesto, 80122 Napoli (IT); IACCARINO, Paolo, 80061 Massa Lubrense (NA) (IT); NICOLAIS, Luigi, 80056 Ercolano (NA) (IT)
(74) Representative: PGA S.p.A.
(86) International application number: PCT/IB2022/057536
(87) International publication number: WO 2023/037181

(56) References cited:
- WO-A1-2009/070274
- ES-A1- 2 320 297
- US-A1- 2018 317 501
- TAMMARO D ET AL: "A novel lab-scale batch foaming equipment: The mini-batch", JOURNAL OF CELLULAR PLASTICS., vol. 52, no. 5, 1 September 2016 (2016-09-01), GB, pages 533 - 543, XP055978556, ISSN: 0021-955X, Retrieved from the Internet <URL:http://www.foamlab.unina.it/wp-content/uploads/2016/03/JCelPlas_2016.pdf> DOI: 10.1177/0021955X15584654

## Description

### Field of the invention

The present invention relates to a process for producing expanded baked food products. The expression baked products is used to indicate products obtained by baking food doughs, such as bread, pizza, cakes, pastry products and the like. The expression expanded products is used to indicate products obtained by expanding a gas within the doughs. In particular, the present invention relates to the production of expanded baked food products performed without using yeasts/leavening chemical agents or without exclusively using yeasts/leavening chemical agents to obtain the expansion of the doughs.

### State of the art

As known, baked products such as bread, pizza, cakes, pastry products and the like are prepared using doughs which comprise yeasts which increase the volume of the dough conferring an alveolar structure to the dough. Leavening is a process through which a dough increases volume due to a gas produced therein by living organisms (yeasts) or result of a chemical reaction by chemical leavening agents.

Methods which provide for introducing compressed air or carbon dioxide or oxygen into a mixer when preparing a dough to obtain a "leavened" dough ready to be baked, for example as described in document US3041176 are also known.

Furthermore, document US2003091715A1 shows a method for making food products with an open-cell internal structure such as gluten-free bread. It is provided for to prepare a dough without kneading so as to obtain a low-consistency viscous dough. The dough is pressurised and subsequently suddenly de-pressurised through a nozzle adapted to generate a foam which is subsequently baked in a tunnel oven.

Also known is document ES2320297A1 which shows an oven provided with elements which allow to vary the pressure, by applying a pressure higher than or lower than atmospheric pressure within the same baking cycle, so as to modulate the characteristics of the obtained end product (such as colour, texture, flavour) by acting on the evaporation of water and the baking temperature.

Also known is document GB191417750 which uses vacuum to evaporate water and create steam bubbles in the dough so as to produce bread without using yeasts.

Document US 2018/317501 A1 is similar to document US2003091715A1, because it shows an extruder or a mixer in which solubilisation occurs under gas pressure in a dough while the dough is mixed. The oven is mentioned as arranged downstream of the extruder. The temperature in the extruder is comprised between 20-30°C (therefore no baking occurs in the extruder) and description emphasises on the fact that the combination of the mixing with the pressure is fundamental. US 2018/317501 also shows an embodiment in which the dissolution of gas occurs in a "mixing container" which provides for mixing and in which the oven is however separated from the "mixing container".

The document WO 2009/070274 shows an oven which cooks meat under pressure and also allows the introduction of CO₂ to create an acidic environment.

Article "A novel lab-scale batch foaming equipment: The mini-batch" (Journal of Cellular Plastics, 2016, Vol. 52(5) 533-543) discloses an experimental apparatus for the study of the foaming process of thermoplastic polymers with physical blowing agents.

### Definitions

The expression "foaming agent" indicates a substance capable of causing the expansion of the dough by forming bubbles within the dough.

The expression "solubilisation of a foaming agent under pressure in the dough" is used to indicate that the foaming agent introduced under pressure into a chamber which already contains the dough, penetrates into the dough and saturates said dough (i.e., the dough absorbs the foaming agent), as a result, when the pressure of the foaming agent is released, bubbles are formed and grow within the dough and the latter expands like some sort of foam.

The expression "density" indicates the ratio between the weight of a given volume of the dough and such volume.

The expression "morphology" indicates the shape, the size and the number per volume unit of the bubbles (bubble density) formed within the expanded dough, as well as the local distribution of the dough between the bubbles.

The expression "expanded dough" indicates a dough inside which there were formed bubbles by means of a foaming agent. Therefore, the density of a dough also depends on the morphology of the bubbles formed inside said dough as well as on the number thereof.

The expression "solid" dough is used to indicate a dough which substantially has its own volume thereof and substantially its own shape before the solubilisation and release of the foaming agent.

The expression "liquid" dough is used to indicate a dough which has its own volume but acquires the shape of a container which contains it.

The expression baking step (baking) is used to indicate the step in which there are chemical reactions in the dough activated by the temperature.

### Summary of the invention

The Applicant observed that, in order to produce expanded baked products without using natural or chemical yeasts (or without exclusively using natural or chemical yeasts), the methods and the known apparatuses described above can be improved in several aspects.

In particular, the Applicant observed that the introduction of gas during the mixing of the dough as described in the document US3041176 does not allow to precisely control the properties of the obtained dough and therefore of the baked product after baking, given that the introduction of the gas occurs while the dough is still being prepared in the mixer and furthermore, after the mixing, it should be transported up to an oven for baking. Furthermore, the Applicant observed that the process described in US3041176 needs, for the implementation thereof, of a complex and cumbersome plant.

The Applicant observed that also the process described in document US2003091715A1 requires a cumbersome and complex plant. Furthermore, after pressurisation, the liquid dough is ejected through a nozzle for filling the moulds which are transported in the tunnel oven. Even in this case, the control of the properties of the dough due to the pressurisation and subsequent de-pressurisation cannot be accurate. For similar reasons, even the document US 2018/317501 A1 does not allow an accurate control of the properties of the dough due to the pressurisation and subsequent de-pressurisation.

The Applicant also observed that the document ES2320297A1 considers the use of pressure in the oven to manage the evaporation of water and obtain particular organoleptic properties (such as colour, texture, flavour). In particular, the pressure is used to control the baking, having an impact on the thermal conductivity of the gas around the dough and on the evaporation of water, but ES2320297A1 does not make any reference whatsoever to controlling the pressure to manage the "leavening/expansion" of the dough.

Lastly, the Applicant observed that although setting out to produce bread without using yeast, also the process described in document GB191417750 does not allow to effectively and precisely control the expansion of the dough, given that, as indicated previously, it uses vacuum only and not a pressure higher than the atmospheric pressure.

Therefore, the Applicant felt the need to propose a process for producing expanded baked food products which allows to obtain higher quality baked products, with respect to those which can be obtained using methods known in the prior art, without using yeasts or without exclusively using yeasts.

The Applicant also set out to propose a process for producing expanded baked food products which allows to accurately control the properties of the obtained food product.

The Applicant also set out to propose a process for producing expanded baked food products that allows to adapt - in a relatively simple and quick fashion - the production specifications as a function of the type of food product to be produced and/or the characteristics to be obtained.

The Applicant also set out to propose a process for producing expanded baked food products that is relatively cost-effective and quick.

The Applicant found that the objects listed above and others are substantially achieved by a method for producing expanded baked food products which envisages solubilising a gaseous foaming agent under pressure in the dough placed in the oven in which the dough is baked.

In particular, the Applicant found that the objects listed above and others can be substantially achieved by a process according to one or more of the attached claims and/or according to one or more of the following aspects.

According to a first aspect, the present invention relates to a process for producing expanded baked food products.

The process comprises:
i. first placing a food dough in a baking oven;
ii. then solubilising under pressure at least one gaseous foaming agent in the food dough placed in said baking oven;
iii. then releasing the pressure so as to obtain an expanded food dough;
iv. then extracting the expanded baked food product from said baking oven;
wherein the process further comprises: baking the food dough in the baking oven to obtain an expanded baked food product.

It should be observed that, as indicated above and in claim 1, step iii. (releasing the pressure) is necessarily carried out after step ii (solubilising under pressure).

On the other hand, it should be observed that the step of baking the food dough in the oven is not necessarily carried out after steps ii. (solubilising under pressure) and iii. (releasing the pressure). The step of baking the food dough in the oven can be at least partially concurrent with step ii. and/or step iii. In other words, step ii. and/or iii. may be fully or partly overlapped with the step of baking the food dough in the oven.

Once again, it should be observed that the expression baking step (baking) is used to indicate the step in which there are chemical reactions in the dough activated by the temperature and that such step does not necessarily coincide with the powering of the oven adapted to generate heat. As a matter of fact, for example, there may be a baking step even after the oven has been switched off and while it is cooling but the temperature of the dough is such that the aforementioned chemical reactions are still active.

Once again, it should be observed that the expression "solubilisation of a foaming agent under pressure in the dough" (step ii.) is used to indicate that the foaming agent introduced under pressure into the oven which already contains the dough, penetrates into the dough and saturates said dough (i.e., the dough absorbs the foaming agent), so that, when the pressure of the foaming agent is released (step iii.), bubbles are formed and grow within the dough and the latter expands.

The Applicant observed that the process according to the invention first and foremost allows to produce expanded/leavened baked food products without the need to use yeasts or leavening chemical agents. The elimination of yeast for example opens the market of these food products to allergic subjects too.

The Applicant also observed that the process according to the invention allows to avoid the leavening times required when using yeasts or leavening chemical agents, shortening the production times.

The Applicant also observed that the process according to the invention allows to obtain high quality food products, to accurately control the properties of the obtained food products, to adapt the production specifications in a relatively simple and quick fashion as a function of the type of food product to be produced and/or the characteristics to be obtained.

The Applicant also observed that the process according to the invention can be applied to various baked food products, such as for example bread, focaccias, pizzas, baked pastry food products, etc.

Further aspects of the present invention are listed below.

In an aspect, it is firstly envisaged to prepare the food dough by kneading the ingredients of such dough.

In an aspect, it is envisaged to prepare the food dough before placing it in the oven. In an aspect, the food dough is prepared in a mixer.

In an aspect, the food dough is prepared avoiding the use of any yeast or leavening agent.

In an aspect, the entire process is carried out avoiding the use of any yeast or leavening agent.

In an aspect, the food dough comprises at least one flour.

In an aspect, the food dough is liquid or solid.

In an aspect, placing the food dough in the oven comprises: positioning the food dough on a support plane of the oven, optionally in a basket placed on said support plane.

In an aspect, once placed in the oven, the food dough is not mixed or kneaded further but it is allowed to stand still on the support plane or in the basket.

In an aspect, steps ii. and iii. are repeated at least once (that is they are carried out at least twice) during the process.

In an aspect, steps ii. and/or iii. are carried out during the step of baking the food dough in the oven.

In an aspect, the step of baking the food dough in the oven continues even after steps ii. and iii.

In an aspect, the step of baking the food dough in the oven starts before steps ii. and iii.

In an aspect, step ii. and/or step iii. is/are performed with a pressure profile of said at least one foaming agent variable in time and/or space.

The expression "pressure profile of said at least one foaming agent variable in time and/or space" is used to indicate that the pressure of the foaming agent which is introduced into the oven and acts on the dough may be varied over time according to a predefined profile, for example a profile selected for the specific baked food product.

In an aspect, the pressure of the aforementioned profile may also take values lower than the atmospheric pressure.

In an aspect, the pressure may take values variable in space as a function of the surface portion of the dough.

In an aspect, different portions of the food dough are subjected to different pressure values.

The conditions variable in time and/or space of the solubilisation step generate - in the food dough - uneven profiles of the concentrations of the foaming agent which, upon expansion, generate differentiated density and morphologies in the product.

In an aspect, the pressure profile comprises a pressurisation from a minimum pressure to a maximum pressure in a rising time, an isobar phase at the maximum pressure for a dwell time and a de-pressurisation phase to the minimum pressure in a decreasing time.

In an aspect, the minimum pressure is the atmospheric pressure.

In an aspect, the minimum pressure is lower than the atmospheric pressure.

In an aspect, the maximum pressure is comprised between 3 bar and 200 bar, optionally between 5 bar and 20 bar.

In an aspect, the rising time is comprised between 3 s and 600 s, optionally between 3 s and 80 s.

In an aspect, the dwell time is comprised between 10 s and 600 s, optionally between 50 s and 200 s.

In an aspect, the decreasing time is comprised between 10 s and 600 s, optionally between 50 s and 100 s.

In an aspect, the foaming agent is a gas.

In an aspect, the foaming agent is a gas selected from the group comprising air, nitrogen, carbon dioxide, helium.

In an aspect, the foaming agent is a mixture of gases, optionally of at least two gases selected from the group comprising air, nitrogen, carbon dioxide, helium.

In an aspect, the foaming agent is a gas selected from the group comprising: hydrocarbons, chlorofluorocarbons, hydrochlorofluorocarbons.

In an aspect, different foaming agents are used during the same process over time. In an aspect, during the same process, steps ii. and iii. are repeated at least once (that is they are carried out at least twice) using different foaming agents and/or different working conditions in terms of time and/or pressure.

The Applicant observed that the characteristics of the expanded food product are also influenced by the type of gas used, given that the reagent species of the dough are submerged into a different dielectric means (that is the gas). For example, carbon dioxide can delay the reactions. For example, with helium, a crust is formed due to the higher thermal conductivity (responsible for a surface heating) and/or due to effects on the reactions.

Also the repetition of steps ii. and iii. allows to control and/or differentiate the morphology of the obtained expanded baked food product.

In an aspect, the step of baking the food dough in the oven is performed at a baking temperature of the oven comprised between 100 °C and 300 °C, optionally between 100 °C and 200 °C.

In an aspect, the product obtained using the method according to at least one of the preceding aspects may be: bread, focaccia, pizza, baked pastry food products such as cakes, panettones, pandoros, colombas, etc.

In an aspect, the disclosure relates to a baking oven configured to carry out the method according to one or more of the preceding aspects.

In an aspect, the invention relates to a baking comprising:
- a casing delimiting a solubilisation and baking chamber that can be sealed tightly;
- heating devices operationally active in the solubilisation and baking chamber;
- pressurisation and de-pressurisation devices operationally active in the solubilisation and baking chamber;
- at least one temperature sensor and at least one pressure sensor configured to detect at least one temperature and at least one pressure in the solubilisation and baking chamber;
- a control unit operatively connected to the heating devices, to the pressurisation and de-pressurisation devices, to said at least one temperature sensor and to said at least one pressure sensor;
wherein the control unit is configured and programmed to perform the steps ii. and iii. of process claim 1 and to bake the food dough according to process claim 1.

In an aspect, the casing comprises an opening so as to allow the introduction of the food dough into the solubilisation and baking chamber and a door associated with the opening to sealingly close said opening.

In an aspect, the oven comprises a plane for supporting the dough mounted in the solubilisation chamber.

In an aspect, the heating devices comprise electric resistors arranged in the solubilisation and baking chamber.

In an aspect, the step of baking the food dough in the oven is obtained by activating the heating devices for a predefined time.

In an aspect, the step of baking the food dough in the oven is obtained by power-supplying the electric resistors for said predefined time.

In an aspect, the pressurisation and de-pressurisation devices comprise at least one source of pressurised gas connected to at least one inlet of the solubilisation and baking chamber, wherein, optionally, at least one inlet valve is associated with said at least one inlet.

In an aspect, the pressurisation and de-pressurisation devices comprise at least one outlet of the solubilisation and baking chamber, wherein, optionally, at least one outlet valve is associated with said at least one outlet.

In an aspect, the control unit is of the electric or electronic type.

In an aspect, the solubilisation and baking chamber is divided or can be divided into partitions such to delimit areas of the food dough subjected to different pressure values and/or on which different foaming agents act.

Further characteristics and advantages will be more apparent from the detailed description of preferred but non-exclusive embodiments of a process for producing expanded baked food products according to the present invention and a preferred but not exclusive embodiment of an oven according to the present invention.

### Description of the drawings

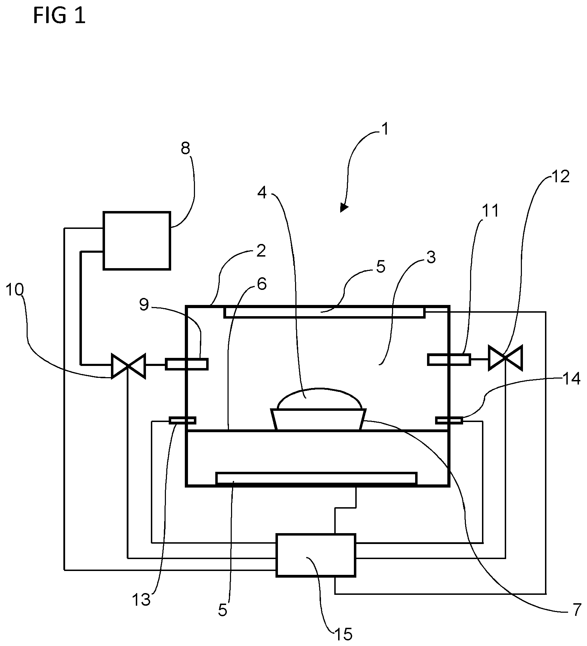

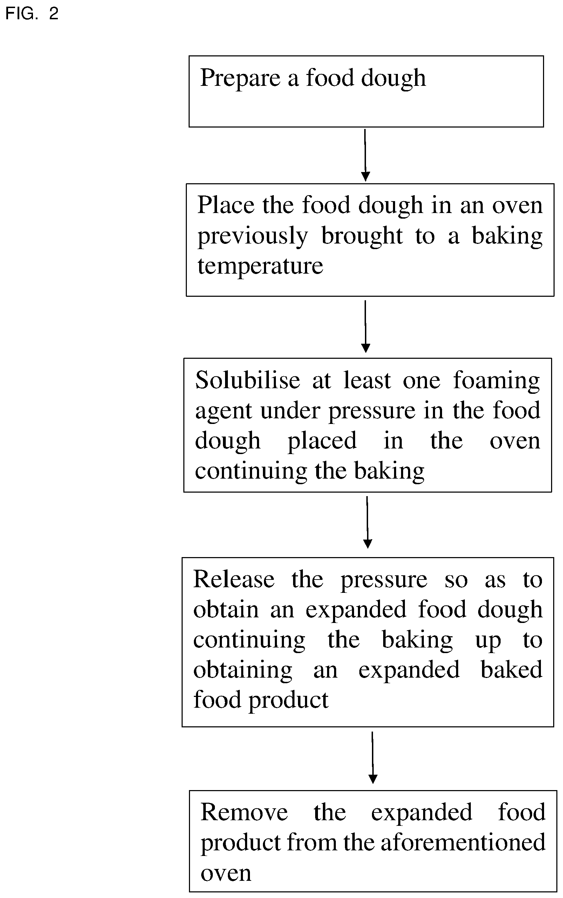

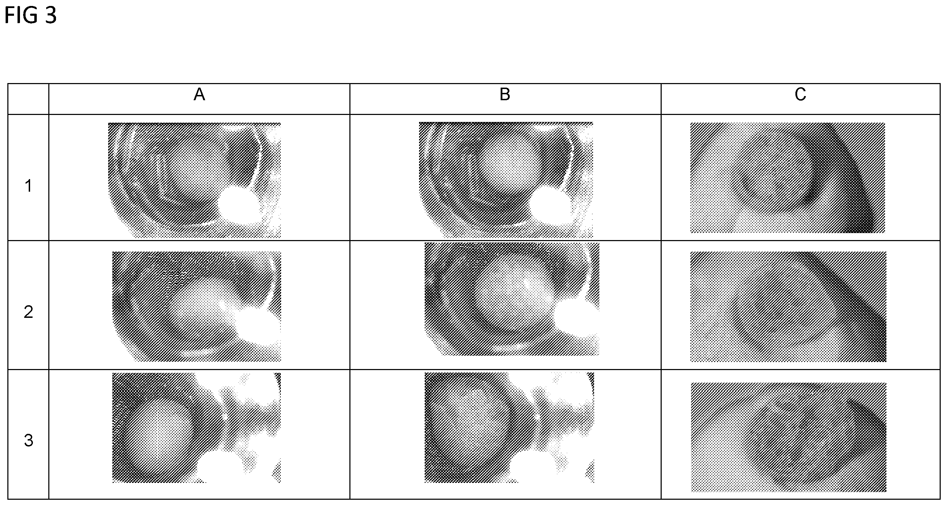

Such description will be outlined hereinafter with reference to the attached drawings, provided solely for by way of non-limiting example, wherein:
▪ figure 1 schematically shows an oven configured to carry out the process of the present invention;
▪ figure 2 is a flow chart of the process according to the present invention; and
▪ figure 3 shows examples of tests conducted by applying the process according to the present invention.

### Detailed description of embodiments of the invention

In figure 1, an oven configured to carry out the process for producing expanded baked food products (for example: bread, focaccia, pizza, baked pastry food products such as cakes, panettones, pandoros, colombas, etc.) according to the present invention, is indicated in its entirety with number 1.

The oven 1 comprises a casing 2 delimiting a solubilisation and baking chamber 3 that can be sealed tightly. The casing 2 comprises an opening so as to allow the introduction of the food dough 4 into the solubilisation and baking chamber 3 and a door associated with the opening to sealingly close said opening. The structure of the casing, the opening and the door have not been shown, given that they can be made in various ways, all within the reach of the person skilled in the art. The structure of the casing may be that of an autoclave given that it should guarantee the sealing of the solubilisation and baking chamber 3.

Heating devices 5 are operationally active in the solubilisation and baking chamber 3. In figure 1 such heating devices 5 are electric resistors arranged above and below a plane 6 for supporting the food dough 4, which may be possibly contained in a basket 7.

Furthermore, pressurisation and de-pressurisation devices are operationally active in the solubilisation and baking chamber 3.

The pressurisation and de-pressurisation devices comprise a source of pressurised gas 8 connected to an inlet 9 of the solubilisation and baking chamber 3 controlled through an inlet valve 10 associated with the inlet 9. The source of pressurised gas 8 may for example be a compressor configured for compressing atmospheric air or a reservoir containing a pressurised gas, such as for example the air or nitrogen, carbon dioxide, helium or a mixture of said gases, which is selected as a function of the food dough 4 to be baked, of the food product to be prepared and of the characteristics of said food product intended to be obtained.

In further variant embodiments, the foaming agent may be selected from hydrocarbons, chlorofluorocarbons, hydrochlorofluorocarbons.

The pressurisation and de-pressurisation devices further comprise an outlet 11 of the solubilisation and baking chamber 3 controlled through an outlet valve 12 associated with such outlet 11.

The oven 1 is further provided with a temperature sensor 13 and a pressure sensor 14 which are configured to respectively detect a temperature and a pressure within the solubilisation and baking chamber 3.

The oven 1 comprises a power supply unit, not shown, configured to guarantee the operation thereof and connected/which can be connected to the power mains.

A control unit 15 of the electric or electronic type is operatively connected to the electric resistors, to the source of pressurised gas 8, to the inlet valve 10, to the outlet valve 12, to the temperature sensor 13, to the pressure sensor 14, to the power supply unit and it is configured and/or programmed/able to manage the oven 1.

In particular, the control unit 15 is configured and programmed/able to carry out part of the process described below.

According to the process of the present invention, the food dough 4 is firstly prepared by combining and kneading the required ingredients, for example in a mixer, for example of the known type and not shown, that is before introducing it into the oven 1.

The food dough 4 is prepared without using any yeast or leavening agent. In particular, the entire process described herein is carried out avoiding the use of any yeast or leavening agent.

Once through with the preparation, the food dough 4 is placed in the basket 7 and positioned on the plane 6 for supporting the solubilisation and baking chamber 3 of the oven 1 previously brought to a baking temperature (T_{c}) for example comprised between 100 °C and 300 °C, optionally between 100 °C and 200 °C.

In this non-limiting example, the baking starts right away and continues during the subsequent steps described below.

The door of the solubilisation and baking chamber 3 is closed and said solubilisation and baking chamber 3 is pressurised and subsequently de-pressurised through the source of pressurised gas 8, the inlet valve 10 and the outlet valve 12 and according to a pressure profile variable with time and previously set and managed by the control unit 15. As previously mentioned, the gas introduced into the solubilisation and baking chamber 3 is selected as a function of the food dough 4 to be baked, of the food product to be prepared and of the characteristics of said food product intended to be obtained.

The gas acts as a foaming agent given that, introduced under pressure into the oven 1 which already contains the food dough 4, penetrates into the food dough 4 and saturates said food dough 4 (i.e., the food dough 4 absorbs the gas) and, as a result, when the pressure of the gas is released (by opening the outlet valve 12 controlled by the control unit 15), bubbles are formed and grow within the food dough 4 and the latter expands like a sort of foam. In other words, the gas is solubilised in the food dough 4 under pressure so as to obtain an expanded food dough 4 once the pressure is released.

For example, the pressure profile comprises a pressurisation from a minimum pressure Pₘᵢₙ, for example from the atmospheric pressure Pₐₜₘ, to a maximum pressure Pₘₐₓ, for example comprised between 3 bar and 200 bar, optionally between 5 bar and 20 bar, in a rising time t₁, for example comprised between 3 s and 600 s, optionally between 3 s and 80 s, an isobar phase at the maximum pressure Pₘₐₓ for a dwell time t₂, for example comprised between 10 s and 600 s, optionally between 50 s and 200 s, and a de-pressurisation phase once again up to the minimum pressure Pₘᵢₙ in a decreasing time t₃, for example comprised between 10 s and 600 s, optionally between 50 s and 100 s.

The pressure profile may also take values lower than the atmospheric pressure.

Such pressure profile allows to generate an even expansion of the food dough.

The conditions variable with time of the solubilisation step may also be calculated to generate - in the food dough - uneven profiles of the concentrations of gases which, upon the expansion, generate differentiated density and morphologies in the expanded food product.

During the pressurisation and de-pressurisation, the baking continues and it can also continue even after releasing the pressure. At the end of baking, the expanded baked food product is removed from the oven 1.

The aforementioned pressure profile and also a temperature profile may be defined as a function of the product to be prepared.

For example, the solubilisation under pressure (pressurisation and maintenance of the pressure, step ii.) and/or the release of the pressure (step iii.) may be fully or partly overlapped with the baking or the baking may be carried out at the end of step iii. (releasing the pressure).

The solubilisation and release cycle (steps ii. and iii.) may also be repeated several times during the process, with the same gas or also changing the gas used and/or with the same operating conditions or with different operating conditions in terms of pressure and/or time.

In an embodiment of the present invention, the oven 1 may be provided with bulkheads arranged/which can be arranged in the solubilisation and baking chamber 3 so as to partition said solubilisation and baking chamber 3 into partitions such to delimit areas of the food dough 4 subjected to different pressure values and/or on which different gases act. To this end, the oven 1 is provided with several inlets connected to respective sources of gas and with several outlets. Each inlet/outlet pair is placed in fluid communication with one of the aforementioned partitions. Therefore, the pressure takes values which vary, besides with time, also in the space as a function of the portion of the food dough.

Examples of tests conducted to verify the process according to the invention are shown below.

### EXAMPLE 1 - Prior art for comparison

A food dough for pizzas was prepared in a mixer (5L, HAUSWIRT^{®} Planetary Mixer) using 100g of flour 0 (Nuvola, CAPUTO^{®}), 2.5g of sea salt (GEMMA DI MARE lodised Sea Salt) and 60mL of water and 0.15g of yeast (LIEVITAL Fresh Brewer's Yeast), following the recommendations laid down in the European Regulation No 97/2010 dated 4 February 2010 (Pizza Napoletana as a Traditional Speciality Guaranteed). The food dough was used after 4 hours of leavening. A mini-batch system capable of reaching high pressure values and high temperatures, described in the work by D. Tammaro, V. Contaldi, MG Pastore Carbone, E. Di Maio, S. lannace, A novel lab-scale batch foaming equipment: The mini-batch, Journal of Cellular Plastics, 2016, was used as reactor (oven). An almost spherical sample with an approximately 10mm diameter was introduced into the reactor at a temperature of 146°C and maintained for 240s at atmospheric pressure, after which the reactor was opened and the foam (expanded food product) was removed for characterisation.

### EXAMPLE 2 - Invention

A food dough for pizzas was prepared in a mixer (5L, HAUSWIRT^{®} Planetary Mixer) using 100g of flour 0 (Nuvola, CAPUTO^{®}), 2.5g of sea salt (GEMMA DI MARE lodised Sea Salt) and 60mL of water following the recommendations laid down in the European Regulation No 97/2010 dated 4 February 2010 (Pizza Napoletana as Traditional Speciality Guaranteed), avoiding the use of any type of yeast or leavening agent. The same reactor described in example 1 was used. After introducing an almost spherical sample with an approximately 10mm diameter into the reactor (oven) previously brought to a temperature of 146°C, a pressure history using carbon dioxide was imposed using a control system provided with a pressure reader and actuated valves. In particular, the pressure history envisages a step of pressurising from atmospheric pressure to 15 bar in a rising time (t₁) of 5s, an isobar phase for a dwell time (t₂) of 150s and a de-pressurisation phase down to atmospheric pressure in a decreasing time (t₃) of 90s. At the end of the pressure program, the reactor was opened and the foam (expanded food product) was removed for characterisation.

### EXAMPLE 3 - Invention

This example is identical to example 2 except for the fact that helium was used instead of carbon dioxide.

Figure 3 shows a comparison of three examples shown above, in which lines 1, 2 and 3 show samples of the doughs according to examples 1, 2 and 3 while columns A, B and C respectively show:
A initial condition of the dough samples seen through a sapphire window of the reactor/oven;
B samples at the end of the process seen through the aforementioned window; and
C internal morphology of the produced samples

The final density of the samples produced in the two examples of the invention (example 2 and 3) are similar (about 0.9 g/cm³) to the case of the comparison example (example 1). Also the analysis of the morphology shows comparable results, with porosity with diameters of about 300 µm for the dough with yeast (example 1) and about 500 µm for the samples obtained through physical foaming with carbon dioxide (example 2) and helium (example 3). Lastly, the helium (example 3) also allows to observe the formation of the typical crust not observed with carbon dioxide.

### EXAMPLE 4 - Prior art for comparison

A food dough for cakes was prepared by mixing - with a hand whip - 40 g of flour 0 (Nuvola, CAPUTO^{®}), 40g of sugar, 1 egg and 2g of pastry yeast. The same reactor/oven described in example 1 was used. A sample of about 1g of the liquid dough was poured into an aluminium container and placed in the reactor at a temperature of 120°C and maintained for 360s at atmospheric pressure, after which the reactor was opened and the foam (expanded food product) was removed for characterisation.

### EXAMPLE 5 - Invention

A food dough for cakes was prepared by mixing - with a hand whip - 40 g of flour 0 (Nuvola, CAPUTO^{®}), 40g of sugar and 1 egg. The same reactor/oven described in example 1 was used. A sample of about 1g of liquid dough was poured into an aluminium container and placed in the reactor at a temperature of 120°C. After closing the reactor, a pressure history was imposed using compressed air, through a control system provided with pressure reader and actuated valves. In particular, the pressure history envisages a step of pressurising from atmospheric pressure to 6 bar in a rising time (t₁) of 60s, an isobar phase to 6bar for a dwell stationary (t₂) of 60s and a de-pressurisation phase down to atmospheric pressure in a decreasing time (t₃) of 60s. At the end of the pressure program, the reactor is opened and the foam removed for characterisation.

In the comparison between the results of the experiment described in examples 4 and 5, the achievement of comparable densities is observed, in the order of 0.7-0.8 g/cm³ and comparable morphologies, with bubbles with diameter in the range of 0.1 - 0.5 mm.

## Claims

1. Process for producing expanded baked food products, comprising:
i. first placing a food dough (4) in a baking oven (1);
ii. then solubilising under pressure at least one gaseous foaming agent in the food dough (4) placed in said baking oven (1);
iii. then releasing the pressure so as to obtain an expanded food dough (4);
iv. then extracting the expanded baked food product from said baking oven (1);
wherein the process further comprises: baking the food dough (4) in said baking oven (1) to obtain an expanded baked food product.

2. Process according to claim 1, wherein the step of baking the food dough (4) in the baking oven (1) is at least partially concurrent with step ii. and/or step iii.

3. Process according to claim 1 or 2, wherein steps ii. and iii. are repeated at least once.

4. Process according to claim 3, wherein steps ii. and iii. are repeated using different gaseous foaming agents and/or different working conditions in terms of time and/or pressure.

5. Process according to one of claims 1 to 4, wherein step ii. and/or step iii. is/are performed with a pressure profile of said at least one gaseous foaming agent variable in time and/or space.

6. Process according to claim 5, wherein the pressure profile comprises a pressurisation from a minimum pressure (Pₘᵢₙ) to a maximum pressure (Pₘₐₓ) in a rising time (t₁), an isobar phase at the maximum pressure (Pₘₐₓ) for a dwell time (t₂) and a de-pressurisation phase to the minimum pressure (Pₘᵢₙ) in a decreasing time (t3).

7. Process according to claim 6, wherein the minimum pressure (Pₘᵢₙ) is the atmospheric pressure (Pₐₜₘ) and the maximum pressure (Pₘₐₓ) is comprised between 3 bar and 200 bar, optionally between 5 bar and 20 bar.

8. Process according to claim 6 or 7, wherein the rising time (t₁) is comprised between 3 s and 600 s and/or wherein the dwell time (t₂) is comprised between 10 s and 600 s and/or wherein the decreasing time (t₃) is comprised between 10 s and 600 s.

9. Process according to claim 6 or 7, wherein the rising time (t₁) is comprised between 3 s and 80 s and/or wherein the dwell time (t₂) is comprised between 50 s and 200 s and/or wherein the decreasing time (t₃) is comprised between 50 s and 100 s.

10. Process according to one of claims 1 to 9, wherein the gaseous foaming agent is a gas selected from the group comprising air, nitrogen, carbon dioxide, helium or a mixture of at least two of said gases.

11. Process according to one of claims 1 to 10, wherein the step of baking the food dough (4) in the baking oven (1) is performed at a baking temperature (T_{c}) of the baking oven comprised between 100 °C and 300 °C, optionally between 100 °C and 200 °C.

12. Process according to one of claims 1 to 11, wherein the step of baking the food dough (4) in the baking oven (1) is performed at a baking temperature (T_{c}) of the baking oven comprised between 100 °C and 200 °C.

13. Process according to one of claims 1 to 8, wherein the food dough (4) is prepared avoiding the use of any yeast or leavening agent.

14. Process according to one of claims 1 to 13, wherein placing the food dough (4) in the baking oven (1) comprises: positioning the food dough (4) on a support plane (6) of the oven (1).

15. Process according to one of claims 1 to 14, wherein solubilising under pressure said at least one gaseous foaming agent in the food dough (4) comprises: putting said at least one gaseous foaming agent under pressure in a solubilisation and baking chamber (3) of the baking oven (1) containing the food dough (4) until the gaseous foaming agent penetrates into the food dough (4) and saturates said food dough (4), therefore, when in step iii., the pressure of the gaseous foaming agent is released, bubbles are formed and grow in the food dough (4) and said food dough(4) expands like foam.

16. Baking oven comprising:
- a casing (2) delimiting a solubilisation and baking chamber (3) that can be sealed tightly;
- heating devices (5) operationally active in the solubilisation and baking chamber (3);
- pressurisation and de-pressurisation devices (8, 9, 10, 11, 12) operationally active in the solubilisation and baking chamber (3);
- at least one temperature sensor (13) and at least one pressure sensor (14) configured to detect at least one temperature and at least one pressure in the solubilisation and baking chamber (3);
- a control unit (15) operatively connected to the heating devices (5), to the pressurisation and de-pressurisation devices (8, 9, 10, 11, 12), to said at least one temperature sensor (13), and to said at least one pressure sensor (14);
wherein the control unit (15) is configured and programmed to perform the steps ii. and iii. of process claim 1 and to bake the food dough (4) according to process claim 1.

## Patentansprüche

1. Verfahren zur Produktion expandierter, gebackener Lebensmittelprodukte, umfassend:
i. zuerst Platzieren eines Lebensmittelteigs (4) in einem Backofen (1);
ii. danach Auflösen wenigstens eines gasförmigen Schaummittels unter Druck in dem Lebensmittelteig (4), welcher in dem Backofen (1) platziert ist;
iii. danach derartiges Ablassen des Drucks, dass ein expandierter Lebensmittelteig (4) erhalten wird;
iv. danach Extrahieren des expandierten, gebackenen Lebensmittelprodukts aus dem Backofen (1);
wobei das Verfahren ferner umfasst: Backen des Lebensmittelteigs (4) in dem Backofen (1), um ein expandiertes, gebackenes Lebensmittelprodukt zu erhalten.

2. Verfahren nach Anspruch 1, wobei der Schritt des Backens des Lebensmittelteigs (4) in dem Backofen (1) wenigstens partiell mit Schritt ii. und/oder Schritt iii. gleichzeitig stattfindet.

3. Verfahren nach Anspruch 1 oder 2, wobei die Schritte ii. und iii. wenigstens einmal wiederholt werden.

4. Verfahren nach Anspruch 3, wobei die Schritte ii. und iii. wiederholt werden, während verschiedene gasförmige Schaummittel und/oder verschiedene Arbeitsbedingungen im Sinne von Zeit und/oder Druck verwendet werden.

5. Verfahren nach einem der Ansprüche 1 bis 4, wobei Schritt ii. und/oder iii. mit einem Druckprofil des wenigstens einen gasförmigen Schaummittels durchgeführt wird/werden, welches zeitlich und/oder räumlich variabel ist.

6. Verfahren nach Anspruch 5, wobei das Druckprofil eine Druckbeaufschlagung von einem minimalen Druck (Pₘᵢₙ) zu einem maximalen Druck (Pₘₐₓ) in einer Anstiegszeit (t₁), eine isobare Phase bei dem maximalen Druck (Pₘₐₓ) für eine Haltezeit (t₂) und eine Druckentlastungsphase zu dem minimalen Druck (Pₘᵢₙ) in einer Abnahmezeit (t₃) umfasst.

7. Verfahren nach Anspruch 6, wobei der minimale Druck (Pₘᵢₙ) der Atmosphärendruck (Pₐₜₘ) ist und der maximale Druck (Pₘₐₓ) zwischen 3 bar und 200 bar, optional zwischen 5 bar und 20 bar umfasst ist.

8. Verfahren nach Anspruch 6 oder 7, wobei die Anstiegszeit (t₁) zwischen 3 s und 600 s umfasst ist und/oder wobei die Haltezeit (t₂) zwischen 10 s und 600 s umfasst ist und/oder wobei die Abnahmezeit (t₃) zwischen 10 s und 600 s umfasst ist.

9. Verfahren nach Anspruch 6 oder 7, wobei die Anstiegszeit (t₁) zwischen 3 s und 80 s umfasst ist und/oder wobei die Haltezeit (t₂) zwischen 50 s und 200 s umfasst ist und/oder wobei die Abnahmezeit (t₃) zwischen 50 s und 100 s umfasst ist.

10. Verfahren nach einem der Ansprüche 1 bis 9, wobei das gasförmige Schaummittel ein Gas ist ausgewählt aus der Gruppe umfassend Luft, Stickstoff, Kohlenstoffdioxid, Helium oder eine Mischung von wenigstens zweien dieser Gase.

11. Verfahren nach einem der Ansprüche 1 bis 10, wobei der Schritt des Backens des Lebensmittelteigs (4) in dem Backofen (1) bei einer Backtemperatur (T_{c}) des Backofens durchgeführt wird, welche zwischen 100°C und 300°C, optional zwischen 100°C und 200°C umfasst ist.

12. Verfahren nach einem der Ansprüche 1 bis 11, wobei der Schritt des Backens des Lebensmittelteigs (4) in dem Backofen (1) bei einer Backtemperatur (T_{c}) des Backofens durchgeführt wird, welche zwischen 100°C und 200°C umfasst ist.

13. Verfahren nach einem der Ansprüche 1 bis 8, wobei der Lebensmittelteig (4) vorbereitet wird, wobei die Verwendung von Hefe oder Backtriebmittel vermieden wird.

14. Verfahren nach einem der Ansprüche 1 bis 13, wobei das Platzieren des Lebensmittelteigs (4) in dem Backofen (1) umfasst: Positionieren des Lebensmittelteigs (4) auf einer Trägerfläche (6) des Ofens (1).

15. Verfahren nach einem der Ansprüche 1 bis 14, wobei das Auflösen des wenigstens einen gasförmigen Schaummittels unter Druck in dem Lebensmittelteig (4) umfasst: das wenigstens eine gasförmige Schaummittel in einer Auflösungs- und Backkammer (3) des Backofens (1) unter Druck setzen, welche den Lebensmittelteig (4) beinhaltet, bis das gasförmige Schaummittel in den Lebensmittelteig (4) eindringt und den Lebensmittelteig (4) saturiert, wodurch, wenn in Schritt iii. der Druck des gasförmigen Schaummittels abgelassen wird, in dem Lebensmittelteig (4) Blasen gebildet werden und wachsen und der Lebensmittelteig (4) wie ein Schaum expandiert.

16. Backofen, umfassend:
- ein Gehäuse (2), welches eine Auflösungs- und Backkammer (3) begrenzt, welche dicht verschlossen werden kann;
- Heizvorrichtungen (5), welche in der Auflösungs- und Backkammer (3) betrieblich aktiv sind;
- Druckbeaufschlagungs- und Druckablassvorrichtungen (8, 9, 10, 11, 12), welche in der Auflösungs- und Backkammer (3) betrieblich aktiv sind;
- wenigstens ein Temperatursensor (13) und wenigstens ein Drucksensor (14), welche dazu eingerichtet sind, wenigstens eine Temperatur und wenigstens einen Druck in der Auflösungs- und Backkammer (3) zu detektieren;
- eine Steuerungseinheit (15), welche operativ mit den Heizvorrichtungen (5), den Druckbeaufschlagungs- und Druckablassvorrichtungen (8, 9, 10, 11, 12), dem wenigstens einen Temperatursensor (13) und dem wenigstens einen Drucksensor (14) verbunden ist;
wobei die Steuerungseinheit (15) dazu eingerichtet und programmiert ist, die Schritte ii. und iii. des Verfahrensanspruchs 1 durchzuführen und den Lebensmittelteig (4) nach Verfahrensanspruch 1 zu backen.

## Revendications

1. Procédé de production de produits alimentaires expansés cuits au four, comprenant les étapes consistant à :
i. premièrement placer une pâte alimentaire (4) dans un four de cuisson (1) ;
ii. puis à solubiliser sous pression au moins un agent d'expansion gazeux dans la pâte alimentaire (4) placée dans ledit four de cuisson (1) ;
iii. puis à libérer la pression afin d'obtenir une pâte alimentaire (4) expansée ;
iv. puis à extraire le produit alimentaire expansé cuit au four dudit four de cuisson (1) ;
dans lequel le procédé comprend en outre l'étape consistant à : faire cuire au four la pâte alimentaire (4) dans ledit four de cuisson (1) pour obtenir un produit alimentaire expansé cuit au four.

2. Procédé selon la revendication 1, dans lequel l'étape de cuisson au four de la pâte alimentaire (4) dans le four de cuisson (1) est au moins partiellement concomitante à l'étape ii. et/ou à l'étape iii.

3. Procédé selon la revendication 1 ou 2, dans lequel les étapes ii. et iii. sont répétées au moins une fois.

4. Procédé selon la revendication 3, dans lequel les étapes ii. et iii. sont répétées en utilisant différents agents d'expansion gazeux et/ou différentes conditions de travail en termes de temps et/ou de pression.

5. Procédé selon l'une des revendications 1 à 4, dans lequel l'étape ii. et/ou l'étape iii. est/sont exécutée·s selon un profil de pression dudit au moins un agent d'expansion gazeux variable dans le temps et/ou dans l'espace.

6. Procédé selon la revendication 5, dans lequel le profil de pression comprend une mise sous pression depuis une pression minimale (Pₘᵢₙ) jusqu'à une pression maximale (Pₘₐₓ) dans un temps de montée en pression (t₁), une phase isobare à la pression maximale (Pₘₐₓ) pour une durée de temporisation (t₂) et une phase de dépressurisation jusqu'à la pression minimale (Pₘᵢₙ) dans un temps de réduction (t₃).

7. Procédé selon la revendication 6, dans lequel la pression minimale (Pₘᵢₙ) est la pression atmosphérique (Pₐₜₘ) et la pression maximale (Pₘₐₓ) est comprise entre 3 bars et 200 bars, éventuellement entre 5 bars et 20 bars.

8. Procédé selon la revendication 6 ou 7, dans lequel le temps de montée en pression (t₁) est compris entre 3 s et 600 s et/ou dans lequel la durée de temporisation (t₂) est comprise entre 10 s et 600 s et/ou dans lequel le temps de réduction (t₃) est compris entre 10 s et 600 s.

9. Procédé selon la revendication 6 ou 7, dans lequel le temps de montée en pression (t₁) est compris entre 3 s et 80 s et/ou dans lequel la durée de temporisation (t₂) est comprise entre 50 s et 200 s et/ou dans lequel le temps de réduction (t₃) est compris entre 50 s et 100 s.

10. Procédé selon l'une des revendications 1 à 9, dans lequel l'agent d'expansion gazeux est un gaz sélectionné dans le groupe comprenant l'air, l'azote, le dioxyde de carbone, l'hélium ou un mélange d'au moins deux desdits gaz.

11. Procédé selon l'une des revendications 1 à 10, dans lequel l'étape de cuisson au four de la pâte alimentaire (4) dans le four de cuisson (1) est exécutée à une température de cuisson au four (T_{c}) du four de cuisson comprise entre 100°C et 300°C, éventuellement entre 100°C et 200°C.

12. Procédé selon l'une des revendications 1 à 11, dans lequel l'étape de cuisson au four de la pâte alimentaire (4) dans le four de cuisson (1) est exécutée à une température de cuisson au four (T_{c}) du four de cuisson comprise entre 100°C et 200°C.

13. Procédé selon l'une des revendications 1 à 8, dans lequel la pâte alimentaire (4) est préparée en évitant l'utilisation de quelconque levure ou agent levant.

14. Procédé selon l'une des revendications 1 à 13, dans lequel la mise en place de la pâte alimentaire (4) dans le four de cuisson (1) comprend l'étape consistant à : positionner la pâte alimentaire (4) sur un plan de support (6) du four (1).

15. Procédé selon l'une des revendications 1 à 14, dans lequel la solubilisation sous pression dudit au moins un agent d'expansion gazeux dans la pâte alimentaire (4) comprend les étapes consistant à : mettre en place ledit au moins un agent d'expansion gazeux sous pression dans une chambre de solubilisation et de cuisson au four (3) du four de cuisson (1) contenant la pâte alimentaire (4) jusqu'à ce que l'agent d'expansion gazeux pénètre dans la pâte alimentaire (4) et sature ladite pâte alimentaire (4), par conséquent, lorsque dans l'étape iii., la pression de l'agent d'expansion gazeux est libérée, des bulles sont formées et se développent dans la pâte alimentaire (4) et ladite pâte alimentaire(4) s'expanse comme de la mousse.

16. Four de cuisson comprenant :
- un boîtier (2) délimitant une chambre de solubilisation et de cuisson au four (3) qui peut être hermétiquement scellée ;
- des dispositifs de chauffage (5) fonctionnellement actifs dans la chambre de solubilisation et de cuisson au four (3) ;
- des dispositifs de mise sous pression et de dépressurisation (8, 9, 10, 11, 12) fonctionnellement actifs dans la chambre de solubilisation et de cuisson au four (3) ;
- au moins un capteur de température (13) et au moins un capteur de pression (14) configurés pour détecter au moins une température et au moins une pression dans la chambre de solubilisation et de cuisson au four (3) ;
- une unité de commande (15) fonctionnellement raccordée aux dispositifs de chauffage (5), aux dispositifs de mise sous pression et de dépressurisation (8, 9, 10, 11, 12), audit au moins un capteur de température (13), et audit au moins un capteur de pression (14) ;
dans lequel l'unité de commande (15) est configurée et programmée pour exécuter les étapes ii. et iii. de la revendication de procédé 1 et pour faire cuire au four la pâte alimentaire (4) selon la revendication de procédé 1.
